# EUROPÄISCHE PATENTANMELDUNG

(11) **EP 3 628 154 A1**
(43) Veröffentlichungstag der Anmeldung: **01.04.2020**
(21) Anmeldenummer: 18202359.8
(22) Anmeldetag: 24.10.2018
(51) Int. Cl.: A01M 29/32

(54) **SCHUTZVORRICHTUNG**

(30) Priorität: 28.09.2018 DE 102018007682
(71) Anmelder: SILAG Handel AG, 40764 Langenfeld (DE)
(72) Erfinder: Lapawa, Siegfried, 42697 Solingen (DE)
(74) Vertreter: Demski, Siegfried

(57) **Zusammenfassung**

Die Erfindung betrifft eine Schutzvorrichtung 1 , insbesondere gegenüber Tieren, wie Vögeln, Marder, Schnecken, Kröten und insbesondere Tauben, aufweisend zumindest einen Trägerkörper 2 und eine Vielzahl von Sperrelementen 5. Um eine vielseitige Verwendungsmöglichkeit der Schutzvorrichtung 1 zu schaffen ist vorgesehen, dass die Schutzvorrichtung 1 aus einem Trägerkörper 2 mit Durchbrüchen 4, 6 besteht und an den Trägerkörper 2 einstückig angeformte Sperrelemente 5 vorhanden sind. Hierbei steht im Vordergrund, dass der Trägerkörper 2 der Schutzvorrichtung 1 mit einem anderem Trägerkörper 2 in derart kombiniert werden kann, dass die Sperrelemente 5 entweder zu einer Richtung ausgerichtet sind oder gegebenenfalls V-förmig auseinanderstehen, um eine größere Fläche, beispielsweise vor Tauben zu schützen.

## Beschreibung

Die Erfindung betrifft eine Schutzvorrichtung, insbesondere gegenüber Tieren, wie Vögeln, Marder, Schnecken, Kröten und insbesondere Tauben, aufweisend zumindest einen Trägerkörper und eine Vielzahl von Sperrelementen.

Gattungsgemäße Schutzvorrichtungen werden dafür verwendet, um beispielsweise Tiere wir Marder, Schnecken oder Tauben von zu schützenden Objekten fernzuhalten. Speziell für Tauben werden derartige Schutzvorrichtungen häufig an Gebäuden angebracht, um zu verhindern, dass die Tauben in Nischen oder auf Vorsprüngen sich niederlassen können. In der Regel werden diese Art von Schutzvorrichtungen, beispielsweise mithilfe einer dauerelastischen Versiegelungsmasse auf den Vorsprüngen aufgeklebt. Alternativ besteht selbstverständlich auch die Möglichkeit, dass diese mit Dübeln oder vergleichbaren Hilfsmitteln befestigt werden.

Darüber hinaus müssen zum Teil aber auch Tiere geschützt werden, wie beispielsweise Vogelnester vor Beutetieren oder es besteht die Notwendigkeit, Gartenanlagen, Teiche oder Gemüsebeete vor Schnecken zu schützen.

Ein Montageelement für eine Vogelabwehr ist beispielsweise aus der DE 41 38 514 A1 bekannt. Das hierbei vorgesehene Montageelement besteht aus einem einstückigen Kunststoffteil und weist eine Vielzahl von abstehenden Kunststoffspitzen auf.

Aus der Patentschrift DE 100 03 353 C2 ist eine Anbauvorrichtung für Vögel bekannt, bei der schienenartige Basiselemente mit einem erhabenen Abschnitt verwendet werden, der mit Durchbrüchen versehen ist, durch welche Metallstifte in derart gezogen werden, dass diese beabstandeten breitfächerig auseinander stehen. Das schienenartige Basiselement ist hierbei mit Sollbruchstellen ausgestattet, um eine gewünschte Längenabtrennung vornehmen zu können.

Aus dem deutschen Gebrauchsmuster DE 202 21 442 U1 ist eine Vorrichtung zur Taubenabwehr bekannt, welche aus einem Lochblech und Drahtbiegeteilen besteht, wobei die einzelnen Schenkel der Drahtbiegeteile durch die Löcher des Lochbleches hindurchsteckbar und fixierbar sind. Alternativ wird in dem deutschen Gebrauchsmuster DE 20 2008 000 918 U1 vorgeschlagen, dass die freien Enden einer Vielzahl von Drahtabschnitten durch eine klebende Seite eines Klebebandes hindurchgesteckt werden und mithilfe des Klebebandes auf das zu schützende Objekt aufgeklebt werden.

Als nachteilig ist bei den Vorrichtungen gemäß dem Stand der Technik anzusehen, dass diese teilweise mit ihrer jeweiligen Verpackungseinheit äußerst sperrig sind und darüber hinaus einen erheblichen Montageaufwand benötigen und nicht für besondere Verwendungszwecke eingesetzt werden können.

Der vorliegenden Anmeldung liegt die Aufgabenstellung zugrunde, eine neuartige Schutzvorrichtung aufzuzeigen, welche die Nachteile aus dem Stand der Technik beseitigt und insbesondere eine vielfältige Einsatzmöglichkeit bietet.

Erfindungsgemäß ist zu Lösung der Aufgabenstellung vorgesehen, dass der Trägerkörper zusätzlich mit Durchbrüchen ausgestattet und mit einem zweiten Trägerkörper in derart kombinierbar ist, dass die Sperrelemente eines Trägerkörpers in die vorhandenen Durchbrüche des anderen Trägerkörpers korrespondierend einfädelbar sind. Weitere vorteilhafte Ausgestaltungen der Erfindung sind den Unteransprüchen zu entnehmen.

Die Erfindung geht davon aus, dass ein Trägerkörper verwendet wird, welcher einerseits mit Durchbrüchen ausgestattet ist und andererseits mit Sperrelementen. Nach dem vorgesehenen Verwendungszweck kommt dieser Trägerkörper mit zu einer Seite ausgerichteten Sperrelementen zum Einsatz oder aber jeweils zwei identische Trägerkörper können miteinander in derart kombiniert werden, dass die Sperrelemente eines Trägerkörpers in die vorhandenen Durchbrüche des anderen Trägerkörpers korrespondierend eingefädelt werden und damit nach der Zusammenführung V-förmig auseinanderstehende Sperrelemente oder in einer Richtung ausgerichtete Sperrelemente aufweisen. Für diese Schutzvorrichtung bestehen mannigfaltige Verwendungszwecke. Die Schutzvorrichtung mit V-förmig auseinander laufenden Sperrelementen könnte beispielsweise zusätzlich auf einer Kunststoffplatte gegebenenfalls auch auf einer Pappe in einer Größe von A3 bis A2 aufgeklebt werden und lässt sich auf diese Weise unter den Motorraum eines Fahrzeuges schieben. In dem Fall würde die Schutzvorrichtung als Marderschutz eingesetzt, sodass die Marder nicht in den Motorraum gelangen können. Soweit die Sperrelemente hierbei aus Kunststoff bestehen, besteht auch nicht die Gefahr einer Beschädigung von lackierten Teilen des Fahrzeugs beziehungswiese des Fahrzeugunterbodens oder von Bestandteilen des Motors.

In der doppelten V-förmigen Anordnung der Schutzvorrichtung kann diese weiterhin als Vögel- beziehungsweise Taubenschutz eingesetzt werden, in dem der Trägerkörper auf einen hervorstehenden Sims eines Gebäudes oder vergleichbarer Objekte befestigt wird. Eine Befestigung könnte beispielsweise mithilfe von Befestigungsmitteln wie Schrauben oder Nägeln erfolgen soweit dies möglich ist, wobei diese durch endseitige zusätzliche Durchbrüche zum Einsatz kommen. Hierzu kann der Trägerkörper vorzugsweise endseitig einen Durchbruch aufweisen, um die Befestigung zu ermöglichen. Alternativ besteht die Möglichkeit, dass mithilfe eines Klebebandes gegebenenfalls auch mit einer dauerelastischen Versiegelung die Schutzvorrichtung festgeklebt wird. Eine Festlegung könnte ebenso mit Schrauben und Dübeln oder Klammern erfolgen, die zuvor auf den Gebäudevorsprüngen befestigt werden, um die Schutzvorrichtung anschließend aufzuclipsen. Je nach Größe und Breite des Vorsprungs eines Objektes empfiehlt es sich hierbei gegebenenfalls mehrere Schutzvorrichtungen nebeneinander anzuordnen, um die gesamte Fläche abzudecken. Darüber hinaus könnte die Schutzvorrichtung auch unterhalb eines hervorstehenden Daches angeordnet werden, um das Eindringen von Vögeln zwischen der Dacheindeckung und dem Mauerwerk zu verhindern beziehungsweise den Aufbau von Nestern zu verhindern.

Alternativ besteht aber auch die Möglichkeit, dass mithilfe der Schutzvorrichtung in der einfachen Ausführung ein Nestschutz erreicht wird, beispielsweise für Nester, die sich in einem Baum befinden. Zu diesem Zweck kann der Trägerkörper aufgrund seiner Elastizität um den Baumstamm herumgeführt und mithilfe von Befestigungsmitteln festgelegt werden, wobei in diesem Fall die Sperrelemente nach unten ausgerichtet sind und somit zum Beispiel Katzen daran hindern, entlang des Baumstammes zu dem Vogelnest zu gelangen. Gleiches gilt selbstverständlich für andere Nesträuber. Zu diesem Zweck sind die Sperrelemente besonders lang ausgebildet.

In der einfachen Ausführung der Schutzvorrichtung mit nur nach einer Seite ausgerichteten Sperrelementen können diese zusätzlich als Beeteinfassung zum Einsatz kommen, um Schnecken beziehungsweise Kröten den Zugang zu verwehren. In einem solchen Fall besteht die Möglichkeit, dass die Schutzvorrichtung mithilfe von Heringen aus dem Camping Bereich im Boden verankert wird.

Ebenso besteht die Möglichkeit, mithilfe der Schutzvorrichtung einen Teichschutz aufzubauen, zum Schutz vor Fischräubern, die sich nur über den Boden bewegen können, wie beispielsweise Katzen. Alternativ besteht aber ebenso die Möglichkeit, beispielsweise ein Schildkrötengehege aufzubauen, in dem die Schutzvorrichtung mit ihren Sperrelementen in Richtung auf das Schildkrötengehege ausgerichtet sind und ebenso mit Heringen im Boden befestigt werden. Aufgrund der Elastizität des Trägerkörpers kann dieser hierbei entlang des Teiches oder des Schildkrötengeheges teilweise geradlinig, aber teilweise auch in gekrümmter Form verlegt werden.

Ein anderer Anwendungsfall besteht darin, dass die Schutzvorrichtung für eine Regenrinne eingesetzt wird, um ein Ablagern von Laub in der Regenrinne zu vermeiden, wobei vorzugsweise der Trägerkörper im tiefsten Punkt der Regenrinnen eingeklebt wird und die herabfallenden Blätter zunächst an den Sperrelementen hängen bleiben und vom Wind verweht werden können. Je nach Größe der Regenrinnen können hierbei mehrere parallel verlaufende Schutzvorrichtungen vorgesehen werden, um die gesamte Regenrinne mit den Sperrelementen zu überdecken.

Die besonderen Vorzüge der Schutzvorrichtung bestehen somit in ihrer vielfältigen Verwendungsmöglichkeit und darüber hinaus durch die hohe Elastizität des Trägerkörpers, sodass eine individuelle Anpassung an die örtlichen Gegebenheiten möglich ist.

In einer ersten Ausführungsform der Schutzvorrichtung ist vorgesehen, dass die Durchbrüche und Sperrelemente alternierend auf dem Trägerkörper angeordnet sind, sodass beim Zusammenfügen zweier Trägerkörper die Sperrelemente durch die vorhandenen Durchbrüche des zweiten Trägerkörpers eingefädelt werden und damit eine zusammengefügte Schutzvorrichtung mit V-förmig angeordneten Sperrelementen entsteht. Ebenso besteht die Möglichkeit, dass zwei Trägerkörper derart zusammengefügt werden, dass die Sperrelemente alle in einer Richtung weisen, um beispielsweise beim Einsatz im Bodenbereich zum Schutz eines Teiches oder zum Schutz vor Baumnestern eingesetzt zu werden.

In einer alternativen Ausführungsform ist vorgesehen, dass die Durchbrüche und Sperrelemente jeweils zu mehreren nebeneinander liegend angeordnet sind, wobei immer eine gleiche Anzahl von Durchbrüchen und Sperrelementen zu einer Gruppe zusammengefasst ist und entlang des Trägerkörpers aufeinander folgen. Durch diese Ausführung besteht ebenfalls die Möglichkeit, dass zwei Schutzvorrichtungen miteinander kombiniert werden können, bei der entweder die Sperrelemente in einer Richtung ausgerichtet sind oder V-förmig verlaufen. Hierzu besteht die Möglichkeit, dass beispielsweise zwei oder drei nebeneinander liegende Durchbrüche mit zwei oder drei nebeneinander liegenden Sperrelementen kombiniert werden.

Die Sperrelemente, welche entweder zu einer Richtung oder zu beiden Richtungen mit ihren Spitzen ausgerichtet sind, sind jeweils um den Durchmesser eines Durchbruches zueinander versetzt angeordnet. Der Trägerkörper selbst bildet eine lang gestreckte Basis, an die die Sperrelemente einstückig angeformt sind. Vorzugsweise wird hierbei der Trägerkörper und die Sperrelemente einstückig aus einem Kunststoff hergestellt, wobei besonders bevorzugt ein UV-beständiger Kunststoff, vorzugsweise ABS-Kunststoff verwendet wird.

Die Besonderheit des Trägerkörpers besteht darin, dass dieser elastisch in derart ausgebildet ist, dass der Trägerkörper um eine runde Oberfläche eines Baumstammes oder einer Säule festlegbar ist, wobei vorzugsweise die Sperrelemente mit ihren Spitzen nach unten zeigen, um ein Klettern von Wildtieren, insbesondere Katzen zu verhindern.

Alternativ besteht die Möglichkeit, dass der Trägerkörper soweit elastisch ausgebildet ist, dass der Trägerkörper in einer Ebene angeordnet in einem poligonartigen Verlauf festlegbar ist. Auch in diesem Fall können die Sperrelemente zu einer Richtung oder gegebenenfalls in zwei Richtungen mit ihren Spitzen ausgerichtet sein. Durch den poligonartigen Verlauf aufgrund der vorhandenen Elastizität des Trägerkörpers ist eine individuelle Anpassung an die örtlichen Gegebenheiten möglich.

Der Trägerkörper mit Sperrelementen weist hierbei eine Standardlänge auf, die einerseits miteinander kombinierbar ist, aber auch aufgrund der verwendeten Materialien auf eine individuelle Länge gekürzt werden kann.

In Weiterer Ausgestaltung der Erfindung ist vorgesehen, dass die Sperrelemente einen ersten Abschnitt aufweisen, welcher senkrecht zum Trägerkörper ausgerichtet ist und einen zweiten Abschnitt, welcher gegenüber dem ersten Abschnitt unter einem Winkel angeordnet ist. Die Sperrelemente stehen somit senkrecht auf dem Trägerkörper mit ihrem ersten Abschnitt, während demgegenüber der zweite Abschnitt von dem Trägerkörper weggeneigt ist, um die dafür bestimmungsgemäße Verwendung zu ermöglichen. Der Winkel des zweiten Abschnitts der einzelnen Sperrelemente kann hierbei 10 bis 40 Grad, vorzugsweise 15 bis 20 Grad betragen.

In weiterer Ausgestaltung ist vorgesehen, dass die ersten Abschnitte der Sperrelemente einen größeren Durchmesser als die zweiten Abschnitte aufweisen. In diesem Fall ist der Durchmesser an die vorhandenen Durchbrüche angepasst, sodass die Sperrelemente mit ihren ersten Abschnitten fest in den Trägerköper aufgenommen werden, wobei die zweiten Abschnitte einen geringeren Durchmesser aufweisen, beziehungsweise konisch ausgebildet sind, sodass das Einfädeln der einzelnen Sperrelemente bei einer Kombination zweier Schutzvorrichtungen erleichtert wird.

Alternativ besteht die Möglichkeit, dass die Sperrelemente aus einem biegsamen Metall bestehen und mit dem Trägerköper verbunden sind. Die Verbindung könnte beispielsweise durch Verschweißen oder Verkleben mit dem Kunststoffträgerkörper erfolgen, wobei biegsame Sperrelemente den besonderen Vorteil bieten, dass diese je nach örtlichen Gegebenheiten zusätzlich in eine gewünschte Richtung gebogen werden können, um insbesondere Bereiche oder abgerundete Bereich besser schützen zu können. Dies gilt sowohl für Gebäude als auch für eine bodennahe Befestigung im Bereich von einem Teich oder dergleichen.

Der besondere Vorteil der vorliegenden Erfindung besteht in der Vielseitigkeit der Einsatzmöglichkeit der Schutzvorrichtung, entweder in einer einfachen Form oder einer kombinierten Form mit einem baugleichen Trägerkörper. Aufgrund der Elastizität des Trägerkörpers kann dieser an vorhandene Krümmungen, wie an einem Baumstamm oder einer Säule angepasst werden oder aber soweit eine Verlegung in einer Ebene vorgesehen ist, kann der Trägerkörper poligonartig an die vorhandene Formgebung angepasst werden. Durch die gewählte Konstruktion der Schutzvorrichtung mit einem Trägerelement und Sperrelementen, welche zu einer Seite ausgerichtet sind und der Kombinationsmöglichkeit mit einer baugleichen Anordnung besteht darüber hinaus die Möglichkeit, dass die Sperrelemente mit ihren Spitzen je nach erfolgter Einfädelung V-förmig auseinander stehen und somit einen bestmöglichen Schutz gegenüber beispielsweise Vögeln, insbesondere Tauben zu ermöglichen. Durch die Kombinationsmöglichkeit besteht darüber hinaus der Vorteil, dass die Schutzvorrichtung mit einer hohen Packungsdichte versandt werden kann und erst bei der Montage in der einen oder anderen gewählten Form mit in einer Richtung ausgerichteten Sperrelementen oder V-förmigen Sperrelementen eingesetzt wird.

Die Erfindung wird im Weiteren anhand der Figuren nochmals beschrieben.

Es zeigt
- Fig. 1: in zwei Seitenansichten und einer Draufsicht eine einzelne Schutzvorrichtung,
- Fig. 2: in einer Draufsicht, Seitenansicht und Unteransicht eine Klemmhalterung für eine Schutzvorrichtung und
- Fig. 3: in zwei Seitenansichten einen Erdnagel zur Verwendung mit einer Schutzvorrichtung.

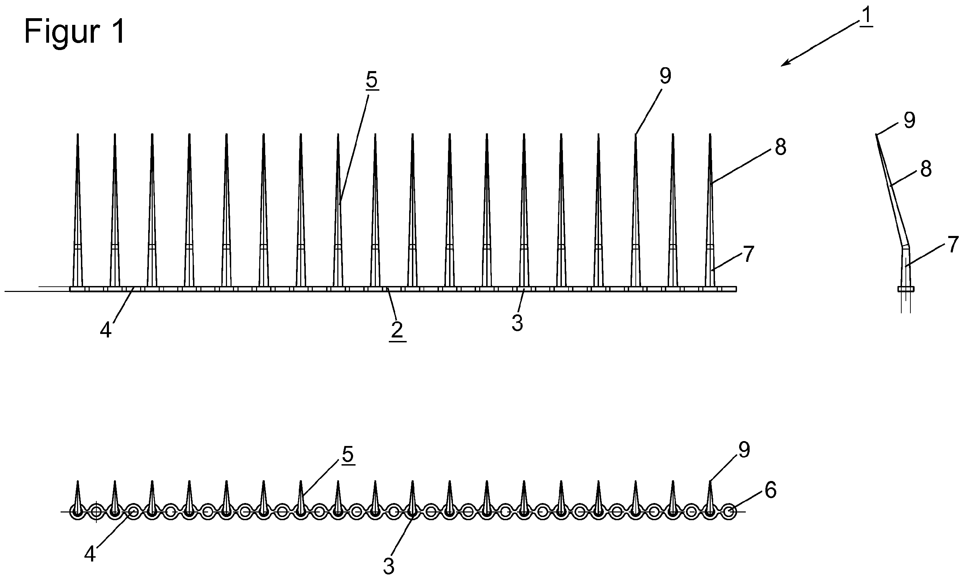

Figur 1 zeigt in zwei Seitenansichten und einer Draufsicht eine Schutzvorrichtung 1, wie sie einzeln oder in Kombination mit einer baugleichen Schutzvorrichtung 1 verwendet werden kann. Ein Trägerkörper 2 besteht aus aneinander gereihten ringförmigen Elementen 3, die alternierend mit einem Durchbruch 4 oder einem Sperrelement 5 ausgestattet sind. Vorhandene Durchbrüche 6 endseitig des Trägerelementes 2 dienen hierbei zur Befestigung mit einem vorhandenen Untergrund. Der Trägerkörper 2 ist dauerelastisch ausgebildet und besteht vorzugsweise aus Kunststoff, wobei die Unterseite eben ausgebildet ist, aufgrund der Elastizität kann die Schutzvorrichtung 1 beispielsweis um einen Baumstamm oder eine runde Säule gelegt werden. Darüber hinaus kann durch die Elastizität der Trägerkörper 2 der Schutzvorrichtung 1 in einer Ebene einen poligonartigen Verlauf einnehmen. Mehrere der Schutzvorrichtungen 1 können hierbei in derart kombiniert werden, dass größere Gebäudevorsprünge durch Hinzufügen weiterer Schutzvorrichtungen 1 geschützt werden. Je nachdem wie groß beispielsweise ein Sims oder Vorsprung eines Gebäudes ist, können hierbei auch mehrere Schutzvorrichtungen 1 parallel nebeneinander angeordnet werden, ansonsten bei entsprechender Länge besteht die Möglichkeit die Schutzvorrichtung 1 beliebig in der Länge durch eine Kombination einzelner Schutzvorrichtungen 1 zu verlängern.

Die Schutzvorrichtung 1 weist hierbei Sperrelemente 5 auf, die alternierend zu den Durchbrüchen 4 angeordnet sind und einen ersten Abschnitt 7 sowie einen zweiten Abschnitt 8 aufweisen. Der erste Abschnitt 7 ist hierbei vorzugsweise senkrecht zum Trägerkörper 2 ausgerichtet und weist einen größeren Durchmesser als der zweite Abschnitt 8 auf. Der zweite Abschnitt 8 ist zudem konisch geformt, sodass endseitig eine Spitze 9 vorliegt, welche je nach Verwendungszweck, beispielsweise Tiere, wie Marder, Schnecken, Kröten oder Tauben abwehren soll oder aber verhindern soll, dass beispielsweise Kröten aus einer vorhandenen Teichanlage, die mit den Schutzvorrichtungen 1 umzäunt ist, ausbrechen können. Ebenso besteht die Möglichkeit, je nach Montage, dass zum Beispiel das Eindringen von Schnecken in Pflanzbeete verhindert wird. Ferner kann die Schutzvorrichtung 1 in Kombination zweier baugleicher Trägerkörper 2 mit Sperrelementen 5 zum Einsetzen und Befestigen in einer Dachrinne verwendet werden, um beispielsweise das Einlagern von Blättern zu verhindern. Soweit die Blätter an den Spitzen hängen bleiben oder sich zwischen den Spitzen verfangen, werden diese durch einen Windstoß entfernt, während demgegenüber bei fehlender Schutzvorrichtung 1 die Blätter sich im Bodenbereich der Regenrinne sammeln und damit zur Verstopfungen führen können.

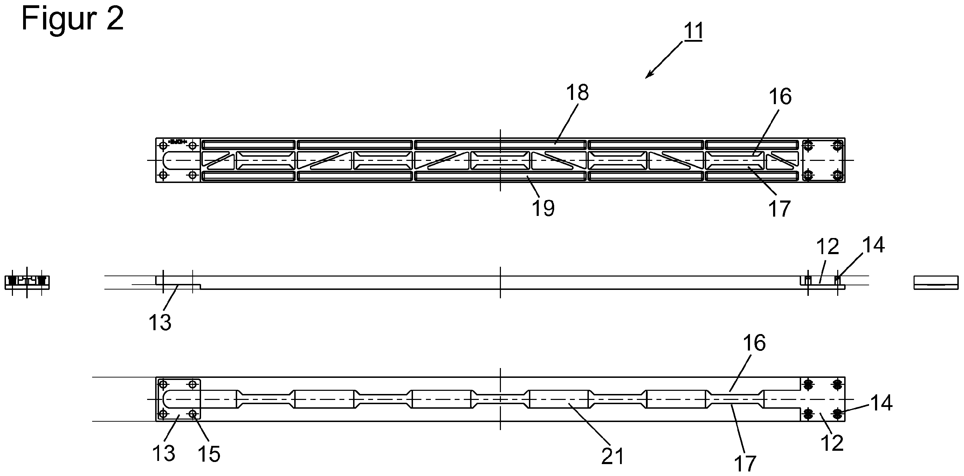

Figur 2 zeigt mehrere Ansichten eine Befestigungsklammer 11, die für eine Schutzvorrichtung 1 vorgesehen ist. Die Befestigungsklammer 11 wird ebenfalls aus Kunststoff hergestellt und dient beispielsweise zur Befestigung der Schutzvorrichtungen 1 auf einem ebenen Untergrund mittels eines Erdspießes. Hierbei besteht die Möglichkeit, dass die Befestigungsklammer 11 aufgeklebt oder alternativ mit Schrauben befestigt wird. Mehrere dieser Befestigungsklammern 11 können in einer Längsrichtung oder rechtwinkelig miteinander verbunden werden. Die Befestigungsklammer 11 ist flach gehalten und ist an einem Ende mit einer Ausnehmung 12 auf der Oberseite versehen, während das gegenüberliegende Ende eine Ausnehmung 13 auf der Unterseite aufweist. Die erste Ausnehmung 12 ist mit hervorstehenden Klemmelementen 14 ausgestattet, welche korrespondierend zu vorhandenen Bohrungen 15 der zweiten Ausnehmung 13 angeordnet sind. Somit können die Klemmelemente 14 in die vorhandenen Bohrungen 15 eingedrückt werden. Durch eine rechteckförmige Zusammenführung der einzelnen Befestigungsklammern 11 entsteht quasi ein Quadrat. Dieses Quadrat aus Befestigungsklammern 11 kann beispielsweise unter den Motor eines Fahrzeuges geschoben werden, sodass ein Schutz vor Mardern besteht.

Die obere Darstellung der Figur 2 zeigt die Unteransicht, während die mittlere Darstellung eine Seitenansicht zeigt und die untere Darstellung eine Draufsicht. Ferner sind die beiden Stirnflächen in jeweils einer Ansicht dargestellt.

Zur Aufnahme der Schutzvorrichtung 1 ist die Befestigungsklammer 11 mit beabstandeten kragenförmig ausgebildeten Klammern 16, 17 ausgestattet. Zwischen den Klammern 16, 17 kann die Schutzvorrichtung 1 entweder eingeschoben oder eingeclipst werden, sodass die Schutzvorrichtung 1 senkrecht auf der Befestigungsklammer 11 angeordnet ist. Auf der Unterseite sind Auflageflächen 18, 19 ausgebildet, welche entweder als Klebefläche verwendet werden können, sofern eine dauerhafte Montage vorgesehen ist, oder zur Auflage auf einem Boden verwendet werden können. Die Befestigungsklammer 11 ist hierbei an die Länge einer Schutzvorrichtung 1 angepasst, sodass diese zwischen der oberen Ausnehmung 12 und unteren Ausnehmung 13 zu liegen kommt.

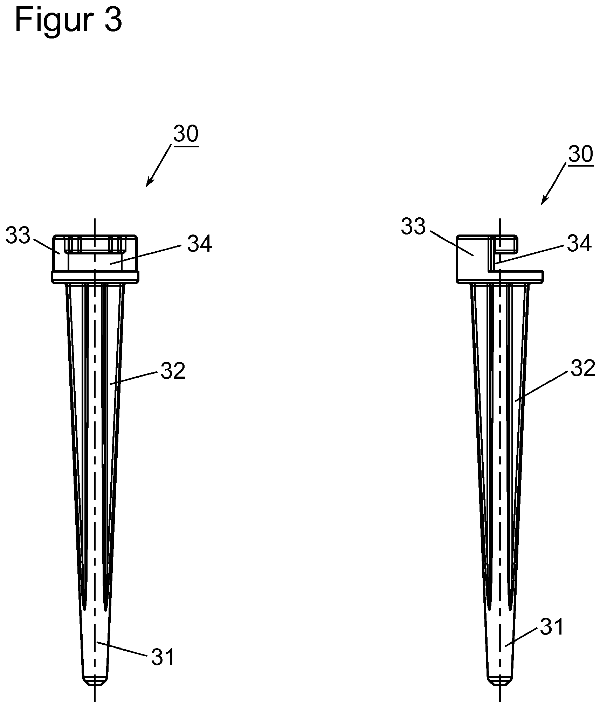

Figur 3 zeigt in zwei Ansichten einen Erdspieß 30, welcher entweder mit der Befestigungsklammer 11 oder mit den Schutzvorrichtungen 1 verwendet werden kann. Der Erdspieß 20 dient hierbei dazu, die Schutzvorrichtung 1 auf einem Untergrund, beispielsweise Erdreich zu befestigen. Der Erdspieß 30 besteht aus einem schlanken Schaft 31, der mit konischen Elementen 32 umfangsverteilt bestückt ist. Kopfseitig ist ein Endstück 33 ausgebildet, welches einen Einschnitt 34 aufweist. Das Endstück 33 ragt aus dem Erdreich heraus, sodass über den Einschnitt 34 beispielsweise eine Befestigungsklammer 11 gegebenenfalls auch nur eine Schutzvorrichtung 1 einklemmend gehalten wird.

### Bezugszeichenliste

- 1: Schutzvorrichtung
- 2: Trägerkörper
- 3: ringförmiges Element
- 4: Durchbruch
- 5: Sperrelement
- 6: Durchbruch
- 7: erster Abschnitt
- 8: zweiter Abschnitt
- 9: Spitze
- 11: Befestigungsklammer
- 12: Ausnehmung
- 13: Ausnehmung
- 14: Klemmelement
- 15: Bohrung
- 16: Klammer
- 17: Klammer
- 18: Auflagefläche
- 19: Auflagefläche
- 20: Erdspieß
- 30: Erdspieß
- 31: Schaft
- 32: konisches Element
- 33: Endstück
- 34: Einschnitt

## Patentansprüche

1. Schutzvorrichtung (1), insbesondere gegenüber Tieren, wie Vögeln, Marder, Schnecken, Kröten und insbesondere Tauben, aufweisend zumindest einen Trägerkörper (2) und eine Vielzahl von Sperrelementen (5),
**dadurch gekennzeichnet,**
**dass** der Trägerkörper (2) zusätzlich mit Durchbrüchen (4, 6) ausgestattet und mit einem zweiten Trägerkörper (2) in derart kombinierbar ist, dass die Sperrelemente (5) eines Trägerkörpers (2) in die vorhandenen Durchbrüche (4, 6) des anderen Trägerkörper (2) korrespondierend einfädelbar sind.

2. Schutzvorrichtung (1) nach Anspruch 1,
**dadurch gekennzeichnet,**
**dass** die Durchbrüche (4, 6) und Sperrelemente (5) alternierend auf dem Trägerkörper (2) angeordnet sind.

3. Schutzvorrichtung (1) nach Anspruch 1 oder 2,
**dadurch gekennzeichnet,**
**dass** die Durchbrüche (4, 6) und Sperrelemente (5) jeweils zu mehreren nebeneinanderliegend angeordnet sind, wobei immer eine gleiche Anzahl von Durchbrüchen (4, 6) und Sperrelementen (5) zu einer Gruppe zusammengefasst entlang des Trägerkörpers aufeinanderfolgen.

4. Schutzvorrichtung (1) nach einem der Ansprüche 1, 2 oder 3,
**dadurch gekennzeichnet,**
**dass** die Sperrelemente (5) jeweils zumindest um den Durchmesser eines Durchbruches (4, 6) zueinander versetzt angeordnet sind.

5. Schutzvorrichtung (1) nach einem der Ansprüche 1 bis 4,
**dadurch gekennzeichnet,**
**dass** der Trägerkörper (2) eine langgestreckte Basis bildet, an die die Sperrelemente (5) einstückig angeformt sind.

6. Schutzvorrichtung (1) nach einem der Ansprüche 1 bis 5,
**dadurch gekennzeichnet,**
**dass** der Trägerkörper (2) und die Sperrelemente (5) aus einem Kunststoff bestehen.

7. Schutzvorrichtung (1) nach einem der Ansprüche 1 bis 6,
**dadurch gekennzeichnet,**
**dass** der Trägerkörper (2) und die Sperrelemente (5) aus einem UV beständigen Kunststoff, vorzugsweise ABS bestehen.

8. Schutzvorrichtung (1) nach einem der Ansprüche 1 bis 7,
**dadurch gekennzeichnet,**
**dass** der Trägerkörper (2) elastisch in derart ausgebildet ist, dass der Trägerkörper (2) um eine runde Oberfläche eines Baustammes oder einer Säule festlegbar ist.

9. Schutzvorrichtung (1) nach einem der Ansprüche 1 bis 8,
**dadurch gekennzeichnet,**
**dass** der Trägerkörper (2) elastisch in derart ausgebildet ist, dass der Trägerkörper (2) in einer Ebene angeordnet in einem polygonartigen Verlauf festlegbar ist.

10. Schutzvorrichtung (1) nach einem der Ansprüche 1 bis 9,
**dadurch gekennzeichnet,**
**dass** der Trägerkörper (2) unter Berücksichtigung einer vorgegebenen Gesamtlänge individuell kürzbar ist.

11. Schutzvorrichtung (1) nach einem der Ansprüche 1 bis 10,
**dadurch gekennzeichnet,**
**dass** die Sperrelemente (5) einen ersten Abschnitt (7) aufweisen, welcher senkrecht zum Trägerkörper (2) ausgerichtet ist und einen zweiten Abschnitt (8) aufweisen, welcher gegenüber dem ersten Abschnitt (7) unter einem Winkel angeordnet ist.

12. Schutzvorrichtung (1) nach einem oder mehreren der Ansprüche 1 bis 11,
**dadurch gekennzeichnet,**
**dass** der Winkel des zweiten Abschnittes (8) 10 bis 40 Grad, vorzugsweise 15 bis 20 Grad beträgt.

13. Schutzvorrichtung (1) nach einem oder mehreren der Ansprüche 1 bis 12,
**dadurch gekennzeichnet,**
**dass** die Enden der zweiten Abschnitte (8) der Sperrelemente (5) zweier kombinierter Trägerkörper (2) V-förmig zueinander ausgerichtet ist.

14. Schutzvorrichtung (1) nach einem oder mehreren der Ansprüche 1 bis 13,
**dadurch gekennzeichnet,**
**dass** die ersten Abschnitte (7) der Sperrelemente (5) einen größeren Durchmesser als die zweiten Abschnitte (8) aufweisen.

15. Schutzvorrichtung (1) nach einem oder mehreren der Ansprüche 1 bis 14,
**dadurch gekennzeichnet,**
**dass** die zweiten Abschnitte eine konische Form aufweisen.

16. Schutzvorrichtung (1) nach einem oder mehreren der Ansprüche 1 bis 15,
**dadurch gekennzeichnet,**
**dass** die Sperrelemente (5) aus einem biegsamen Metall bestehen und mit dem Trägerkörper (2) verbunden sind.
